# EUROPÄISCHE PATENTSCHRIFT

(11) **EP 2 125 460 B1**
(45) Veröffentlichungstag und Bekanntmachung des Hinweises auf die Patenterteilung: **08.01.2014**
(21) Anmeldenummer: 07822612.3
(22) Anmeldetag: 15.11.2007
(51) Int. Cl.: B60S 1/38

(54) **WISCHBLATT**
WIPER BLADE
BALAI D'ESSUIE-GLACE

(30) Priorität: 14.12.2006 DE 102006059077
(43) Veröffentlichungstag der Anmeldung: 02.12.2009
(73) Patentinhaber: Robert Bosch GmbH, 70442 Stuttgart (DE)
(72) Erfinder: COEMANS, Wildrik, 3840 Borgloon (BE); VAN BAELEN, David, 3020 Winksele (BE); SAEVELS, Peter, 3384 Attenrode (BE); BEELEN, Hans, 3540 Herk De Stad (BE)
(86) Internationale Anmeldenummer: PCT/EP2007/062365
(87) Internationale Veröffentlichungsnummer: WO 2008/071510

(56) Entgegenhaltungen:
- WO-A-2005/092680
- WO-A-2005/115813
- WO-A-2005/115814
- DE-A1- 19 811 702
- US-A- 4 156 951

## Beschreibung

### Stand der Technik

Die Erfindung geht von einem Wischblatt nach dem Oberbegriff des Anspruchs 1 aus.

Aus der DE 102 45 693 A1 ist ein Wischblatt bekannt, das als Tragelement zwei parallel verlaufende Federschienen aufweist, die an ihren Enden jeweils durch einen Querbügel miteinander verbunden sind. Ferner sind Haltemittel vorgesehen, die die Wischleiste relativ zu den Federschienen fixieren. Zur Demontage der Wischleiste sind die Haltemittel leicht lösbar. Sie sind einerseits mit dem Querbügel und andererseits über einen Stoffschluss, einen Kraftschluss und/oder über einen Formschluss mit der Wischleiste verbunden. Bei einem Ausführungsbeispiel greift ein Dorn durch eine Führungsbohrung des Querbügels in die Wischleiste und wird durch eine Endkappe, die durch ein Federelement am Querbügel verrastet, in der Montageposition gehalten. Das Federelement kann durch ein von außen bedienbares Element gelöst werden, sodass die Endkappe und der Dorn zum Wechseln der Wischleiste gelöst werden können. Im montierten Zustand stützt sich die Endkappe mit einer geschlossenen Stirnseite, die zum Ende des Wischblatts weist, an der zugeordneten Stirnseite des Querbügels ab. Ein anderes Ausführungsbeispiel zeigt eine aus Blech gefertigte Halteeinheit, die mit einem zur Wischleiste gebogenen Dorn in die Wischleiste gedrückt wird. Bei der Montage der Federschienen wird die Halteeinheit unter den Querbügel geschoben und zwischen Anschlagflächen und einer Federzunge an dem Querbügel verrastet. Die Federzunge kann nach Entfernen der Endkappe in eine Freigabeposition gedrückt werden, sodass die Federschienen demontiert werden können.

Aus der WO 2005/115814 A1 ist ein gattungsgemäßes Wischblatt bekannt, bei dem die Haltemittel an einer Endkappe vorgesehen sind. Die Federschienen sind in inneren Führungsprofilen der Endkappen geführt, die an der zum Ende des Wischblatts weisenden Stirnseite geschlossen sind, sodass die Federschienen durch die geschlossenen Stirnflächen in Längsrichtung relativ zu den Endkappen fixiert sind. Die Endkappen sind ihrerseits in Längsrichtung durch lösbare Haltemittel zur Kopfleiste der Wischleiste fixiert. Somit sind auch die Federschienen über die Endkappe relativ zur Wischleiste fixiert. Als Haltemittel zwischen der Endkappe und der Kopfleiste ist eine parallel zu dieser verlaufende Federzunge vorgesehen, die an ihrer Unterseite eine in montiertem Zustand in die Kopfleiste eingreifende Sperrnase aufweist. Damit sich die Sperrnase nicht selbstständig aus der montierten Position löst, kann die Federzunge mit einem Riegel blockiert werden, der die Federzunge mit der Sperrnase in eine Verriegelungsposition gegen die Kopfleiste drückt. Bei der Demontage werden zunächst die Riegel gelöst, bevor die Federzunge angehoben wird. Zur besseren Montage und Demontage des Riegels besitzt dieser mehrere seitliche Griffmulden.

### Offenbarung der Erfindung

Nach der Erfindung ist ein Wischblatt mit den Merkmalen des Anspruchs 1 vorgesehen, wobei mindestens eine Endkappe in dem Bereich, der mit den Federschienen und der Kopfleiste überlappt, eine verschließbare Montageöffnung besitzt, durch die die Wischleiste und gegebenenfalls die Federschienen montiert und demontiert werden können, sodass eine verschlissene Wischleiste ohne großen Aufwand gegen eine neue Wischleiste ausgewechselt werden kann. Dabei können die Endkappen mit einem Spoiler fest verbunden oder lösbar auf den Federschienen geführt sein und mit diesen unmittelbar oder über den Querbügel verrasten. Bei der zweiten Alternative kann die Wischleiste ohne Demontage der Federschienen gewechselt werden. Sollen auch die Federschienen gewechselt werden, wird die Verrastung der Endkappe gelöst. Hierzu weist sie zweckmäßigerweise in dem flach verlaufenden Teil ihres Strömungsprofils eine in Längsrichtung des Wischblatts weisende Federzunge auf, die von außen betätigbar und mit einer Rastnase mit dem Querbügel verrastet, der die beiden Federschienen miteinander verbindet. Um die Verrastung auch ohne Werkzeug lösen zu können, ist es vorteilhaft, wenn die Federzunge an ihrer nach außen weisenden Seite ein Bedienelement besitzt, z.B. einen Griff.

Die Montageöffnung kann durch beliebige geeignete Mittel geschlossen werden, z.B. durch einen Deckel, der in der geschlossenen Position mit der Endkappe verrastet, oder eine Klappe, die an einer Seite beispielsweise durch ein Filmscharnier an der Endkappe angelenkt ist, während sie durch weitere Rastmittel in der geschlossenen Position gesichert wird. Eine weitere vorteilhafte Möglichkeit ergibt sich durch einen Querriegel, der mittels eines Führungsprofils an der Endkappe geführt und quer zur Längsrichtung des Wischblatts verschiebbar ist. In der geschlossenen Position wird der Querriegel zweckmäßigerweise mit einer Raste gesichert. Zur besseren Handhabung des Querriegels besitzt dieser eine nach außen weisende Griffleiste.

Zu den aufgeführten Haltemitteln kann das Wischblatt weitere, z.T. aus dem Stand der Technik bekannte Haltemittel aufweisen. So kann zweckmäßigerweise an dem Querbügel eine Haltefeder befestigt sein, die zur Mitte des Wischblatts weist und unter einer Vorspannung im montierten Zustand gegen die Wischleiste drückt. Dabei wird die Vorspannung so gewählt, dass einerseits eine gute Montagemöglichkeit und andererseits eine ausreichende Fixierung erreicht werden. Ferner kann vorgesehen werden, dass der Federweg der Haltefeder durch die Endkappe begrenzt wird und/oder, dass der Anpressdruck der Haltefeder durch die Endkappe erhöht wird. Dies ist bei einer lösbaren Endkappe einfach zu realisieren.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine perspektivische Teilansicht eines Wischblatts mit einer geöffneten Endkappe,
Fig. 2 ein Wischblatt nach Fig. 1 mit einer geschlossenen Endkappe,
Fig. 3 eine Variante eines Wischblatts nach Fig. 1 in einem halb montierten Zustand,
Fig. 4 eine Variante zur Fig. 3
Fig. 5 einen Schnitt entsprechend der Linie V-V in Fig. 4 und
Fig. 6 eine Variante zu Fig. 5.

### Ausführungsformen der Erfindung

Ein Wischblatt 10 besitzt eine Wischleiste 12 mit einer Wischlippe 14, die über einen Kippsteg 18 mit einer Kopfleiste 16 verbunden ist. Diese hat an ihren Längsseiten Längsnuten 20, die zwischen sich einen Steg 22 bilden und auf der der Wischlippe 14 abgewandten Seite von einer Rückenleiste 28 begrenzt werden. In den Längsnuten 20 befinden sich als Tragelement dienende Federschienen 24, die seitlich ein Stück weit aus den Längsnuten 20 vorstehen. Auf den vorstehenden Teilen der Federschienen 24 ist ein Spoiler 30 montiert.

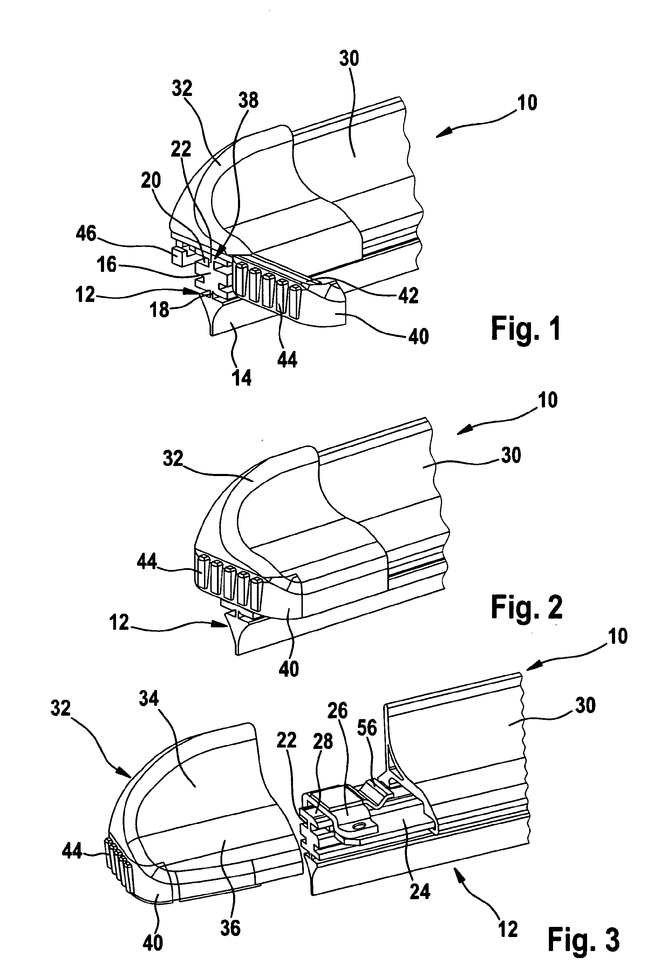

Bei der Ausführung nach Fig. 1 und 2 sind mit den Enden des Spoilers 30 Endkappen 32 fest verbunden. Sie reichen an ihrer zum Ende des Wischblatts 10 weisenden Stirnseite über die Federschienen 24 und entsprechend ein Stück weit über die Kopfleiste 16 in Richtung auf die Wischlippe 14. An der Stirnseite besitzt die Endkappe 32 im Bereich der Kopfleiste 16 und der Federschienen 24 eine Montageöffnung 38, durch die die Wischleiste 12 und die Federschienen 24 montiert werden können.

Die Montageöffnung 38 ist mittels eines Querriegels 40 verschließbar. Dieser wird durch ein Führungsprofil 42 an der Endkappe 32 geführt und in seiner geschlossenen Endposition durch eine Raste 46 gesichert. Im geschlossenen Zustand fügt sich der Querriegel 40 harmonisch in die Gesamtkontur der Endkappe 32 ein. Er besitzt zur leichteren Handhabung eine nach außen weisende Griffleiste 44. Bei der Ausführung nach Fig. 3 ist die Endkappe 32 getrennt vom Spoiler 30 dargestellt. Diese Ausführung besitzt einen Querbügel 26, durch den die Federschienen 24 miteinander verbunden sind, und der die Rückenleiste 28 der Wischleiste 12 überbrückt. An dem Querbügel 26 ist eine Haltefeder 56 in geeigneter Weise befestigt, z.B. durch Kleben, Schweißen, Löten, Klippsen oder dgl. Die Haltefeder 56 besitzt ein zur Mitte des Wischblatts 10 weisendes, in Längsrichtung v-förmiges Profil, mit dem sie gegen die Kopfleiste 16 drückt. Der Druck auf die Kopfleiste 16 kann durch geeignete Vorrichtungen in der Endkappe 32 verstärkt werden, an denen sich die Haltefeder 56 abstützen kann.

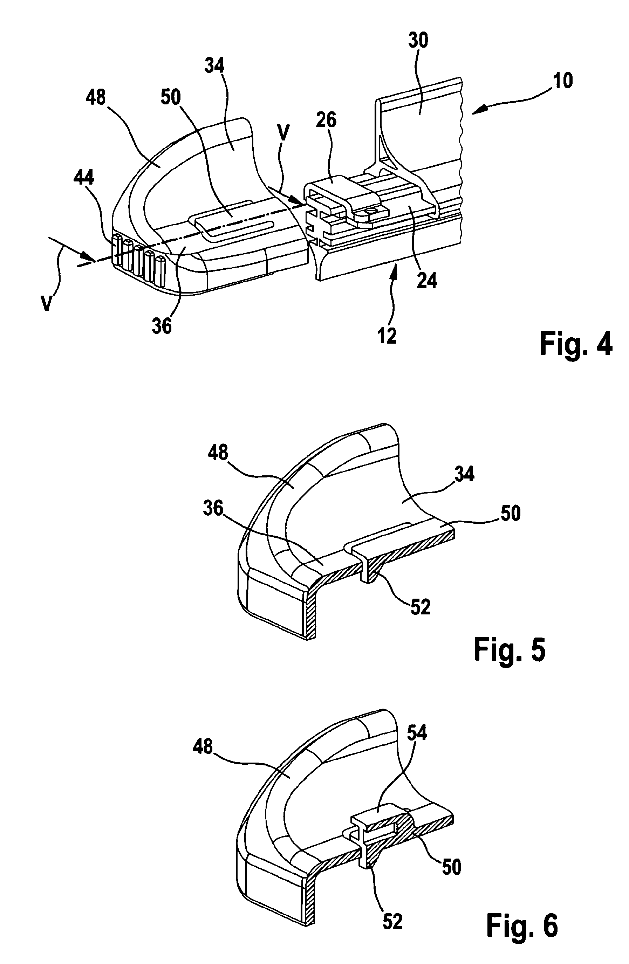

Die Ausführung nach Fig. 4 besitzt eine lösbare Endkappe 48. Diese besitzt in einem flach verlaufenden Teil 36 des Strömungsprofils 34 der Endkappe 48 eine in Längsrichtung weisende, von außen bedienbare Federzunge 50, die an ihrem freien Ende eine Rastnase 52 besitzt. Diese greift im montierten Zustand hinter die zur Mitte des Wischblatts 10 weisenden Stirnseite des Querbügels 26 und sichert somit die Endkappe 48 in Längsrichtung relativ zu den Federschienen 24, auf denen sie geführt ist. Die Endkappe 48 in der Ausführung nach Fig. 6 weist an der Außenseite ihrer Federzunge 50 ein Bedienelement 54 in Form eines Griffs auf, sodass der Rastmechanismus der Federzunge 50 ohne ein Werkzeug gelöst werden kann.

## Patentansprüche

1. Wischblatt (10) mit einer Wischleiste (12), die in ihrer Kopfleiste (16) in seitlichen Längsnuten (20) als Tragelement zwei parallel verlaufende Federschienen (24) besitzt, auf denen ein Spoiler (30) und Endkappen (32, 48) vorgesehen sind, wobei die Endkappen (32, 48) jeweils mit einem Strömungsprofil (34) an den Spoiler (30) anschließen und an ihren zu den Enden des Wischblatts (10) weisenden Stirnseiten zu einer Wischlippe (14) hin über die Federschienen (24) reichen, **dadurch gekennzeichnet, dass** mindestens eine Endkappe (32, 48) in dem Bereich, der mit den Federschienen (24) und der Kopfleiste (16) überlappt, eine verschließbare Montageöffnung (38) besitzt, durch die die Wischleiste (12) und gegebenenfalls die Federschienen (24) montiert und demontiert werden können.

2. Wischblatt (10) nach Anspruch 1, **dadurch gekennzeichnet, dass** die Montageöffnung (38) durch einen Querriegel (40) verschließbar ist, der mittels eines Führungsprofils (42) an der Endkappe (32, 48) geführt und quer zur Längsrichtung des Wischblatts (10) verschiebbar ist.

3. Wischblatt (10) nach Anspruch 2, **dadurch gekennzeichnet, dass** der Querriegel (40) eine nach außen weisende Griffleiste (44) besitzt.

4. Wischblatt (10) nach einem der Ansprüche 2 oder 3, **dadurch gekennzeichnet, dass** der Querriegel (40) in der geschlossenen Position mit einer Raste (46) gesichert ist.

5. Wischblatt (10) nach einem der vorhergehenden Ansprüche, **dadurch gekennzeichnet, dass** die Federschienen (24) an ihren Enden jeweils durch einen Querbügel (26) miteinander verbunden sind, an dem eine zur Mitte des Wischblatts (10) weisende Haltefeder (56) befestigt ist, die gegen eine Rückenleiste (28) der Kopfleiste (16) drückt.

6. Wischblatt (10) nach Anspruch 5, **dadurch gekennzeichnet, dass** der Druck der Haltefeder (56) auf die Rückenleiste (28) durch Vorrichtungen an der Endkappe (32, 48) verstärkt wird.

7. Wischblatt (10) nach einem der vorhergehenden Ansprüche, **dadurch gekennzeichnet, dass** die Endkappe (32) mit dem Spoiler (30) fest verbunden ist.

8. Wischblatt (10) nach einem der Ansprüche 1 bis 6, **dadurch gekennzeichnet, dass** die Endkappe (48) lösbar ist und in dem flach verlaufenden Teil (36) des Strömungsprofils (34) eine in Längsrichtung des Wischblatts (10) weisende Federzunge (50) besitzt, die von außen betätigbar und mit einer Rastnase (52) mit einem Querbügel (26) verrastet, der die beiden Federschienen (24) miteinander verbindet.

9. Wischblatt (10) nach Anspruch 8, **dadurch gekennzeichnet, dass** die Federzunge (50) an ihrer nach außen weisenden Seite ein Bedienelement (54) aufweist.

## Claims

1. Wiper blade (10) with a wiper strip (12) which in lateral longitudinal grooves (20) in its head strip (16), has, as supporting element, two spring rails (24) which run in parallel and on which a spoiler (30) and end caps (32, 48) are provided, wherein the end caps (32, 48) are each connected by a flow profile (34) to the spoiler (30) and, on their end sides facing the ends of the wiper blade (10), reach over the spring rails (24) toward a wiper lip (14), **characterized in that** at least one end cap (32, 48) has a closeable assembly opening (38); through which the wiper strip (12) and optionally the spring rails (24) can be installed and removed, in the region which overlaps the spring rails (24) and the head strip (16).

2. Wiper blade (10) according to Claim 1, **characterized in that** the assembly opening (38) can be closed by a cross bar (40) which is guided on the end cap (32, 48) by means of a guide profile (42) and can be displaced transversely with respect to the longitudinal direction of the wiper blade (10).

3. Wiper blade (10) according to Claim 2, **characterized in that** the cross bar (40) has an outwardly facing gripping strip (44).

4. Wiper blade (10) according to either of Claims 2 and 3, **characterized in that** the cross bar (40) is secured in the closed position by a catch (46).

5. Wiper blade (10) according to one of the preceding claims, **characterized in that** the spring rails (24) are connected to each other at their ends by a respective transverse clip (26) to which a retaining spring (56) is fastened, said retaining spring facing the center of the wiper blade (10) and pressing against a back strip (28) of the head strip (16).

6. Wiper blade (10) according to Claim 5, **characterized in that** the pressure of the retaining spring (56) against the back strip (28) is reinforced by means of devices on the end cap (32, 48).

7. Wiper blade (10) according to one of the preceding claims, **characterized in that** the end cap (32) is fixedly connected to the spoiler (30).

8. Wiper blade (10) according to one of Claims 1 to 6, **characterized in that** the end cap (48) can be released and, in the shallow part (36) of the flow profile (34), has a spring tongue (50) which faces in the longitudinal direction of the wiper blade (10), can be actuated from the outside and latches by means of a latching lug (52) to a transverse clip (26) which connects the two spring rails (24) to each other.

9. Wiper blade (10) according to Claim 8, **characterized in that** the spring tongue (50) has an operating element (54) on its side facing outward.

## Revendications

1. Balai d'essuie-glace (10) comprenant une raclette (12) de balai d'essuie-glace qui présente en tant qu'élément de support, dans sa barrette de tête (16) dans des rainures longitudinales latérales (20), deux rails élastiques (24) s'étendant parallèlement sur lesquels sont prévus un déflecteur (30) et des capuchons d'extrémité (32, 48), les capuchons d'extrémité (32, 48) se raccordant respectivement par un profil d'écoulement (34) au déflecteur (30) et s'étendant, au niveau de leurs côtés frontaux orientés vers les extrémités du balai d'essuie-glace (10), au-dessus des rails élastiques (24) jusqu'à une lèvre (14) de balai d'essuie-glace, **caractérisé en ce qu'**au moins un capuchon d'extrémité (32, 48) présente, dans la région qui chevauche les rails élastiques (24) et la barrette de tête (16), une ouverture de montage (38) pouvant être fermée et à travers laquelle la raclette (12) de balai d'essuie-glace et éventuellement les rails élastiques (24) peuvent être montés et démontés.

2. Balai d'essuie-glace (10) selon la revendication 1, **caractérisé en ce que** l'ouverture de montage (38) peut être fermée par une barre transversale (40) qui est guidée sur le capuchon d'extrémité (32, 48) au moyen d'un profilé de guidage (42) et peut être déplacée transversalement à la direction longitudinale du balai d'essuie-glace (10).

3. Balai d'essuie-glace (10) selon la revendication 2, **caractérisé en ce que** la barre transversale (40) présente une barrette de préhension (44) orientée vers l'extérieur.

4. Balai d'essuie-glace (10) selon la revendication 2 ou 3, **caractérisé en ce que** la barre transversale (40) est fixée dans la position fermée à l'aide d'un taquet (46).

5. Balai d'essuie-glace (10) selon l'une quelconque des revendications précédentes, **caractérisé en ce que** les rails élastiques (24) sont respectivement reliés l'un à l'autre à leurs extrémités par un étrier transversal (26) auquel est fixé un ressort de retenue (56) orienté vers le centre du balai d'essuie-glace (10), lequel ressort de retenue presse contre une barrette de dos (28) de la barrette de tête (16).

6. Balai d'essuie-glace (10) selon la revendication 5, **caractérisé en ce que** la pression du ressort de retenue (56) sur la barrette de dos (28) est amplifiée par des dispositifs sur le capuchon d'extrémité (32, 48).

7. Balai d'essuie-glace (10) selon l'une quelconque des revendications précédentes, **caractérisé en ce que** le capuchon d'extrémité (32) est relié fixement au déflecteur (30).

8. Balai d'essuie-glace (10) selon l'une quelconque des revendications 1 à 6, **caractérisé en ce que** le capuchon d'extrémité (48) est amovible et présente, dans la partie (36) s'étendant de manière plane du profil d'écoulement (34), une languette élastique (50) orientée dans la direction longitudinale du balai d'essuie-glace (10), laquelle languette élastique peut être actionnée depuis l'extérieur et s'encliquète par un ergot d'encliquetage (52) avec un étrier transversal (26) qui relie les deux rails élastiques (24) l'un à l'autre.

9. Balai d'essuie-glace (10) selon la revendication 8, **caractérisé en ce que** la languette élastique (50) comprend un élément de commande (54) sur son côté orienté vers l'extérieur.
